# EUROPEAN PATENT APPLICATION

(11) **EP 4 236 416 A1**
(43) Date of publication of application: **30.08.2023**
(21) Application number: 20958641.1
(22) Date of filing: 20.10.2020
(51) Int. Cl.: H04W 16/28, H04W 72/04, H04W 72/12

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/039452
(87) International publication number: WO 2022/085088

(57) **Abstract**

A terminal according to an aspect of the present disclosure includes: a control section that determines spatial relation information for an uplink shared channel (Physical Uplink Shared Channel (PUSCH)) scheduled by downlink control information (DCI) based on a control resource set (CONtrol REsource SET (CORESET)) in which the DCI has been detected; and a transmitting section that transmits the PUSCH using a precoder based on the spatial relation information. According to one aspect of the present disclosure, UL transmission can be appropriately controlled even in a case where multi-TRPs are used.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing high speed data rates, providing lower delays and the like (see Non Patent Literature 1). Further, the specifications of LTE-Advanced (third generation partnership project (3GPP) Rel. (Release) 10 to 14) have been drafted for the purpose of further increasing capacity and advancement of LTE (3GPP Rel. 8 and 9).

Successor systems to LTE (for example, also referred to as 5th generation mobile communication system (5G), 5G+(plus), 6th generation mobile communication system (6G), New Radio (NR), 3GPP Rel. 15 and subsequent releases, and the like) have also been studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In the NR, communication using one or a plurality of transmission/reception points (TRP) (multi-TRPs) has been studied.

However, when transmission for multi-TRPs is to be performed using the existing Rel. 15/16 specification, there is a problem that performance, scheduling flexibility, and the like are limited. Therefore, according to the existing Rel. 15/16 specification, UL transmission over the M-TRP is not appropriately performed, and throughput may be reduced or communication quality may be degraded.

Thus, an object of the present disclosure is to provide a terminal, a radio communication method, and a base station that can appropriately control UL transmission even in a case where multi-TRPs are used.

### Solution to Problem

A terminal according to an aspect of the present disclosure includes: a control section that determines spatial relation information for an uplink shared channel (Physical Uplink Shared Channel (PUSCH)) scheduled by downlink control information (DCI) based on a control resource set (CONtrol REsource SET (CORESET)) in which the DCI has been detected; and a transmitting section that transmits the PUSCH using a precoder based on the spatial relation information.

### Advantageous Effects of Invention

According to one aspect of the present disclosure, UL transmission can be appropriately controlled even in a case where multi-TRPs are used.

### Brief Description of Drawings

[FIG. 1] Figs. 1A and 1B are diagrams illustrating examples of repetition transmission of PUSCH.
[FIG. 2] Figs. 2A and 2B are diagrams illustrating examples of an invalid symbol pattern.
[FIG. 3] Figs. 3A and 3B are diagrams illustrating examples of nominal repetitions and actual repetitions.
[FIG. 4] Fig. 4 is a diagram illustrating an example of repetition transmission of PUSCH in multi-TRPs.
[FIG. 5] Figs. 5A and 5B are diagrams illustrating examples of problems in a case where transmission for the M-TRP is performed using the existing Rel. 15/16 specification.
[FIG. 6] Fig. 6 is a diagram illustrating an example of control of the SRI of the PUSCH according to a first embodiment.
[FIG. 7] Figs. 7A and 7B are diagrams illustrating an example of a correspondence between a value of an SRI field and an SRI according to the first embodiment.
[FIG. 8] Fig. 8 is a diagram illustrating an example of a correspondence between a value of an SRI field and an SRI according to a modification of the first embodiment.
[FIG. 9] Fig. 9 is a diagram illustrating an example of control of the transmit power of the PUSCH according to a second embodiment.
[FIG. 10] Fig. 10 is a diagram illustrating an example of configuration of power control parameters in the existing Rel. 15/16 NR.
[FIG. 11] Fig. 11 is a diagram illustrating an example of configuration of power control parameters according to the second embodiment.
[FIG. 12] Fig. 12 is a diagram illustrating another example of configuration of power control parameters according to the second embodiment.
[FIG. 13] Figs. 13A and 13B are diagrams illustrating an example of control of the transmit power of the PUSCH according to a third embodiment.
[FIG. 14] Figs. 14A and 14B are diagrams illustrating an example of control of the transmit power of the PUSCH according to the third embodiment.
[FIG. 15] Fig. 15 is a diagram illustrating an example of a schematic configuration of a radio communication system according to one embodiment.
[FIG. 16] Fig. 16 is a diagram illustrating an example of a configuration of a base station according to one embodiment.
[FIG. 17] Fig. 17 is a diagram illustrating an example of a configuration of a user terminal according to one embodiment.
[FIG. 18] Fig. 18 is a diagram illustrating an example of a hardware configuration of the base station and the user terminal according to one embodiment.

### Description of Embodiments

### (Repetition Transmission)

In Rel. 15, repetition transmission is supported in data transmission. For example, a base station (network (NW), gNB) repeatedly transmits DL data (for example, downlink shared channel (PDSCH)) for a given number of times. Alternatively, a UE repeatedly transmits UL data (for example, uplink shared channel (PUSCH)) for a given number of times.

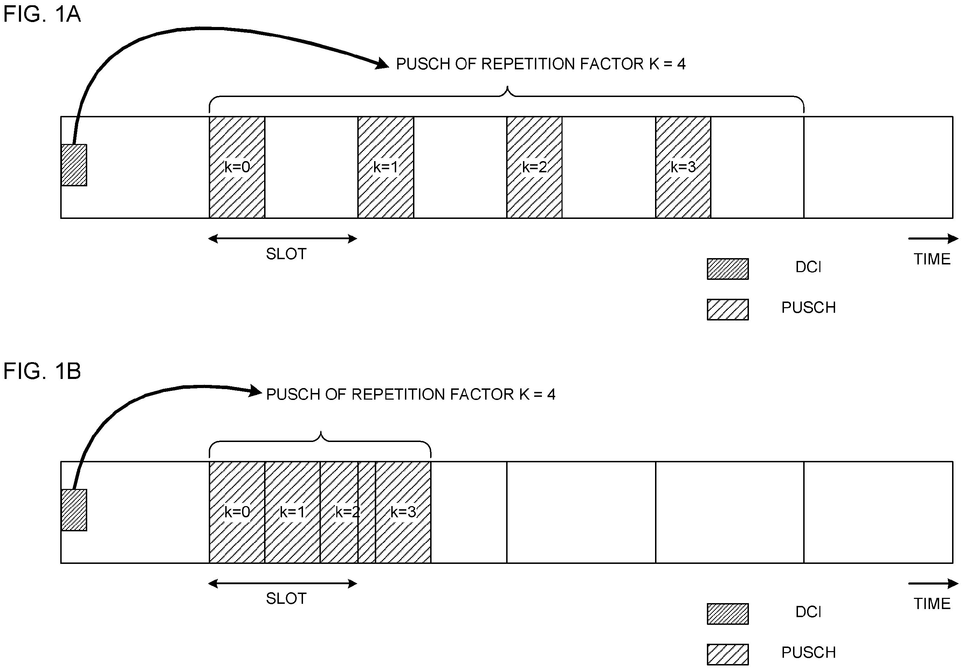

Fig. 1A is a diagram illustrating an example of repetition transmission of a PUSCH. Fig. 1A illustrates an example in which a given number of PUSCH repetitions are scheduled by a single piece of DCI. The number of repetitions is also referred to as a repetition factor K or an aggregation factor K.

In Fig. 1A, the repetition factor K = 4, but the value of K is not limited to this. In addition, an n-th repetition is also referred to as an n-th transmission occasion, and the like, and may be identified by a repetition index k (0 ≤ k ≤ K - 1). In addition, Fig. 1A illustrates repetition transmission of a PUSCH dynamically scheduled by the DCI (for example, dynamic grant-based PUSCH), which may be applied to repetition transmission of a configured grant-based PUSCH.

For example, in Fig. 1A, the UE receives information indicating the repetition factor K (for example, aggregationFactorUL or aggregationFactorDL) semi-statically by higher layer signaling. Here, higher layer signaling may be, for example, any of radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

The UE controls PDSCH reception processing (for example, at least one of reception, demapping, demodulation, or decoding) or a PUSCH transmission processing (for example, at least one of transmission, mapping, modulation, or encoding) in the K consecutive slots based on at least one of the following field values (or information indicated by the field value) in the above DCI:
- the allocation of time domain resource (such as the start symbol and the number of symbols in each slot, for example),
- the allocation of frequency domain resource (for example, a given number of resource blocks (RBs) or a given number of resource block groups (RBGs)),
- the modulation and coding scheme (MCS) index,
- the configuration of the demodulation reference signal (DMRS) of the PUSCH, or
- Spatial relation info of PUSCH, or the state (TCI state) of the transmission configuration indication or transmission configuration indicator (TCI).

The same symbol allocation may be applied between consecutive K slots. Fig. 1A illustrates a case where the PUSCH in each slot is allocated to a given number of symbols from the head of the slot. The same symbol allocation between slots may be determined as described in the above time domain resource allocation.

For example, the UE may determine the symbol allocation in each slot based on the start symbol S and the number of symbols L (for example, Start and Length Indicator (SLIV)) determined based on the value m of a given field (for example, the TDRA field) in the DCI. Note that the UE may determine the first slot based on the K2 information determined based on the value m of a given field (for example, the TDRA field) of the DCI.

On the other hand, the redundancy versions (RVs) applied to the TBs based on the same data may be the same or at least partially different between the consecutive K slots. For example, the RV applied to the TB in the n-th slot (transmission occasion, repetition) may be determined based on the value of a given field (for example, the RV field) in the DCI.

When a resource allocated in consecutive K slots is different in a communication direction in UL, DL, or flexible and at least one symbol in each slot indicated by at least one of uplink and downlink communication direction indication information for TDD control (for example, "TDD-UL-DL-ConfigCommon" and "TDD-UL-DL-ConfigDedicated" of RRC IE) and a slot format identifier (slot format indicator) of DCI (for example, DCI format 2_0), the resource of the slot including the symbol may not be transmitted (or not received).

In Rel. 15, repetition transmission of PUSCH is performed over a plurality of slots (in units of slots) as illustrated in Fig. 1A. However, in Rel. 16 and subsequent releases, it is also assumed that repetition transmission of PUSCH is performed in units shorter than slots (for example, in units of subslots, in units of mini slots, or in units of a given number of symbols) (see Fig. 1B).

In Fig. 1B, the repetition factor K = 4, but the value of K is not limited to this. In addition, an n-th repetition is also referred to as an n-th transmission occasion, and the like, and may be identified by a repetition index k (0 ≤ k ≤ K - 1). In addition, Fig. 1B illustrates repetition transmission of a PUSCH (for example, dynamic grant-based PUSCH) dynamically scheduled by the DCI, but it may be applied to repetition transmission of a configured grant-based PUSCH.

The UE may determine the symbol allocation of PUSCH transmission (for example, PUSCH with k = 0) in a given slot based on the start symbol S and the number of symbols L (for example, StartSymbol and length) determined based on the value m of a given field (for example, the TDRA field) in the DCI of the PUSCH. Note that the UE may determine the given slot based on the Ks information determined based on the value m of the given field (for example, the TDRA field) of the DCI.

The UE may dynamically receive information indicating repetition factor K (for example, numberofrepetitions) using downlink control information. The repetition factor may be determined based on the value m in the given field (for example, TDRA field) in the DCI. For example, a table in which correspondence between the bit value notification of which is performed by the DCI and the repetition factor K, the start symbol S, and the number of symbols L is defined may be supported.

The slot-based repetition transmission illustrated in Fig. 1A may be referred to as a repetition transmission type A (for example, PUSCH repetition Type A), and the subslot-based repetition transmission illustrated in Fig. 1B may be referred to as a repetition transmission type B (for example, PUSCH repetition Type B).

The UE may be configured to apply at least one of the repetition transmission type A and the repetition transmission type B. For example, notification of the repetition transmission type applied by the UE may be performed from the base station to the UE using higher layer signaling (for example, PUSCHRepTypeIndicator).

Either one of the repetition transmission type A and the repetition transmission type B may be configured in the UE for each DCI format scheduling the PUSCH.

For example, for a first DCI format (for example, DCI format 0_1), if higher layer signaling (for example, PUSCHRepTypeIndicator-AorDCIFormat0_1) is configured to the repetition transmission type B (for example, PUSCH-RepTypeB), the UE applies the repetition transmission type B for the PUSCH repetition transmission scheduled in the first DCI format. Otherwise (for example, in a case where PUSCH-RepTypeB is not configured or in a case where PUSCH-RepTypA is configured), the UE applies the repetition transmission type A for the PUSCH repetition transmission scheduled in the first DCI format.

### (Invalid symbol pattern)

In a case where the repetition transmission type B is applied to the PUSCH transmission, it is also considered to notify the UE of information regarding symbols (or symbol patterns) that cannot be used for the PUSCH transmission. The symbol pattern that cannot be used for PUSCH transmission may be referred to as an invalid symbol pattern or the like.

Notification of an invalid symbol pattern using at least one of higher layer signaling and DCI has been studied. The DCI may be in a given DCI format (for example, at least one of DCI formats 0_1 and 0_2).

For example, information regarding an invalid symbol pattern that cannot be used for PUSCH transmission is notified to the UE by using a first higher layer parameter. In addition, the UE may be notified whether to apply the information regarding the invalid symbol pattern by using the DCI. In this case, a bit field (a field for notification of whether to apply the invalid symbol pattern) for indicating whether to apply the information regarding the invalid symbol pattern may be configured in the DCI.

Further, the UE may be notified of the presence or absence of the configuration of the field for notification (or additional bits) in the DCI by using a second higher layer parameter. That is, when the information regarding the invalid symbol pattern is notified by the first higher layer parameter, the UE may determine whether to apply the information regarding the invalid symbol pattern based on the second higher layer parameter and the DCI.

If the first higher layer parameter is not notified or configured, the UE may control the transmission of the PUSCH without considering the invalid symbol pattern. When the first higher layer parameter is notified or configured, the UE may determine whether the invalid symbol pattern is applied based on the second higher layer parameter and the DCI. For example, when the second higher layer parameter instructs the DCI to add an additional bit (or, a given field) instructing whether to apply the invalid symbol pattern, the UE may determine whether to apply the invalid symbol pattern based on the given field.

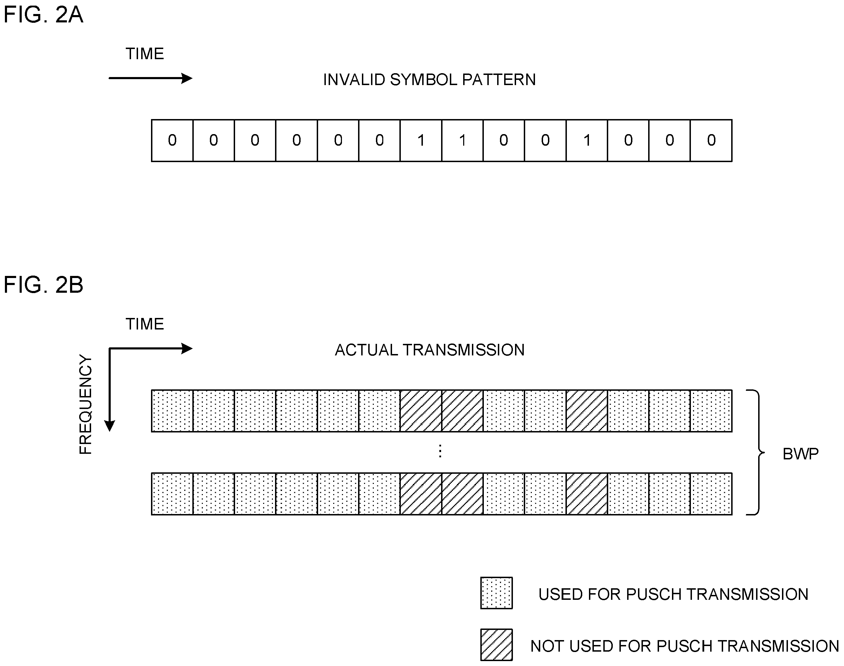

The first higher layer parameter only needs to be information notifying of a symbol pattern that becomes invalid for transmission of the PUSCH, and for example, a bitmap format may be applied (see Fig. 2A). Fig. 2A is a diagram illustrating an example of a case where an invalid symbol pattern is defined by a bitmap (1-D bitmap) for a time domain. The UE may determine resources available for PUSCH transmission in one or more frequency bandwidths (for example, the Bandwidth Part (BWP)) based on the information regarding the invalid symbol pattern (see Fig. 2B).

Here, a case where one or a common invalid symbol pattern is applied to a plurality of BWPs is illustrated, but different invalid symbol patterns may be configured or applied for each BWP.

### (Nominal repetitions/Actual repetitions)

In a case where repetition transmission is performed in units of subslots by applying the repetition transmission type B, there is a case where a given repetition transmission crosses a slot boundary depending on the repetition factor (K), the unit of data allocation, and the like.

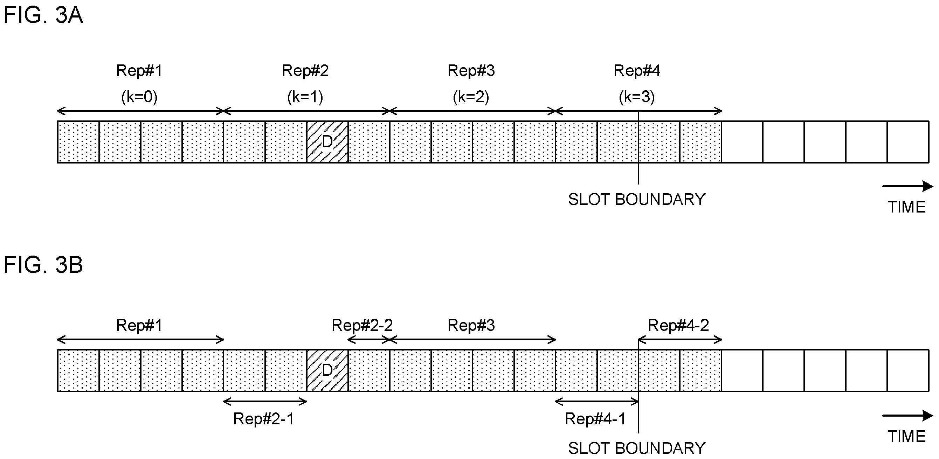

Fig. 3A illustrates an example of a case where the repetition factor (K) is 4 and the repetition transmission type B in a case where the PUSCH length (L) is 4 is applied. In Fig. 3A, a PUSCH with k = 3 is arranged across a slot boundary. In such a case, the PUSCH may be divided (or segmented) with respect to the slot boundary and transmitted (see Fig. 3B).

In addition, a case is also assumed in which a symbol (for example, DL symbol, or invalid symbol, or the like) that cannot be used for PUSCH transmission is included in the slot. Fig. 3A illustrates a case where some symbols in which the PUSCH with k = 1 is arranged include symbols that cannot be used for the PUSCH transmission (here, the DL symbol). In such a case, PUSCH transmission may be performed using symbols excluding the DL symbols (see Fig. 3B).

In a case where a DL symbol (or invalid symbol) is included in a symbol other than both ends in an allocated symbol of a given PUSCH, PUSCH transmission may be performed using a symbol other than the DL symbol portion. In this case, the PUSCH may be divided (or segmented).

Fig. 3B illustrates a case where the PUSCH with k = 1 (Rep #2) is divided into two by the DL symbol (Rep #2-1 and #2-2), and the PUSCH with k = 3 (Rep #4) is divided into two by the slot boundary (Rep #4-1 and #4-2) in the subslot-based repetition transmission.

Note that the repetition transmission before considering the DL symbol, the invalid symbol, or the slot boundary (Fig. 3A) may be referred to as nominal repetitions. The repetition transmission in consideration of the DL symbol, the invalid symbol, or the slot boundary (Fig. 3B) may be referred to as actual repetitions.

### (Spatial relation for SRS and PUSCH)

In Rel. 15 NR, the UE may receive information (SRS configuration information, for example, a parameter in the RRC control element "SRS-Config") used for transmission of a measurement reference signal (for example, a sounding reference signal (SRS)).

Specifically, the UE may receive at least one of information related to one or a plurality of SRS resource sets (SRS resource set information, for example, "SRS-ResourceSet" of the RRC control element) and information related to one or a plurality of SRS resources (SRS resource information, for example, "SRS-Resource" of the RRC control element).

One SRS resource set may be associated with a given number of SRS resources (given number of SRS resources may be grouped). Each SRS resource may be specified by an SRS resource identifier (SRS Resource Indicator (SRI)) or an SRS resource ID (Identifier).

The SRS resource set information may include information of an SRS resource set ID (SRS-ResourceSetId), a list of SRS resource IDs (SRS-ResourceId) used in the resource set, an SRS resource type (for example, one of periodic SRS, semi-persistent SRS, and aperiodic CSI (Aperiodic SRS)), and SRS usage.

Here, the SRS resource type may indicate any one of a periodic SRS (P-SRS), a semi-persistent SRS (SP-SRS), and an aperiodic CSI (aperiodic SRS (A-SRS)). The UE may periodically (or periodically after activation) transmit the P-SRS and the SP-SRS, and transmit the A-SRS based on the SRS request of the DCI.

Further, the usage (the RRC parameter "usage" or the Layer-1 (L1) parameter "SRS-SetUse") may be, for example, beam management, codebook (CB), non-codebook (NCB), antenna switching, or the like. SRS used for the codebook or the non-codebook may be used to determine a precoder for codebook-based or non-codebook-based PUSCH transmission based on SRI.

For example, in the case of the codebook-based transmission, the UE may determine the precoder for the PUSCH transmission based on the SRI, a Transmitted Rank Indicator (TRI), and a Transmitted Precoding Matrix Indicator (TPMI). The UE may determine the precoder for the PUSCH transmission based on the SRI, for the non-codebook-based transmission.

The SRS resource information may include an SRS resource ID (SRS-ResourceId), the number of SRS ports, an SRS port number, a transmission Comb, an SRS resource mapping (for example, time and/or frequency resource location, resource offset, cycle of resource, number of repetitions, number of SRS symbols, SRS bandwidth, and the like), hopping-related information, an SRS resource type, a sequence ID, spatial relation information of an SRS, and the like.

The spatial relation information (for example, "spatialRelationInfo" of the RRC information element) of the SRS may indicate spatial relation information between a given reference signal and the SRS. The given reference signal may be at least one of a Synchronization Signal/Physical Broadcast Channel (SS/PBCH) block, a Channel State Information Reference Signal (CSI-RS), and SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the given reference signal.

Note that, in the present disclosure, an SSB index, an SSB resource ID, and an SSB resource indicator (SSBRI) may be replaced with each other. Furthermore, a CSI-RS index, a CSI-RS resource ID, and a CSI-RS resource indicator (CRI) may be replaced with each other. Further, an SRS index, an SRS resource ID, and an SRI may be replaced with each other.

The spatial relation information of the SRS may include a serving cell index, a BWP index (BWP ID), and the like corresponding to the given reference signal.

When spatial relation information regarding the SSB or CSI-RS and the SRS is configured for a given SRS resource, the UE may transmit the SRS resource by using the same spatial domain filter (spatial domain transmission filter) as a spatial domain filter (spatial domain reception filter) for receiving the SSB or CSI-RS. In this case, the UE may assume that the UE reception beam of the SSB or CSI-RS and the UE transmission beam of the SRS are the same.

For a given SRS (target SRS) resource, when spatial relation information on another SRS (reference SRS) and the SRS (target SRS) is configured, the UE may transmit the target SRS resource by using the same spatial domain filter (spatial domain transmission filter) as a spatial domain filter (spatial domain transmission filter) for transmitting the reference SRS. That is, in this case, the UE may assume that the UE transmission beam of the reference SRS and the UE transmission beam of the target SRS are the same.

The UE may determine the spatial relation of the PUSCH scheduled by the DCI based on a value of a given field (for example, SRS resource identifier (SRI) field) in the DCI (for example, DCI format 0_1). Specifically, the UE may use the spatial relation information (for example, "spatialRelationInfo" of the RRC information element) of the SRS resource determined based on the value (for example, SRI) of the given field for the PUSCH transmission.

When the codebook-based transmission is used for the PUSCH, in the UE, two SRS resources per SRS resource set may be configured by RRC, and one of the two SRS resources may be instructed by DCI (1-bit SRI field). When the non-codebook-based transmission is used for the PUSCH, in the UE, four SRS resources per SRS resource set may be configured by RRC, and one of the four SRS resources may be instructed by DCI (2-bit SRI field).

### (Multi-TRPs)

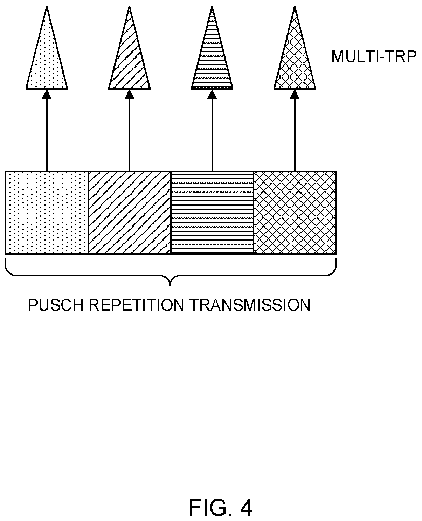

In the NR, studies are underway to allow one or a plurality of transmission/reception points (TRPs)(Multi-TRPs (M-TRPs)) to perform DL transmission to the UE by using one or a plurality of panels (multi-panels). Furthermore, studies are underway to allow the UE to perform UL transmission to one or a plurality of TRPs (see Fig. 4).

However, when transmission for M-TRPs is to be performed using the existing Rel. 15/16 specification, there is a problem that performance, scheduling flexibility, and the like are limited. The transmission for the M-TRP corresponds to, for example, a plurality of PUSCH transmissions using different SRIs.

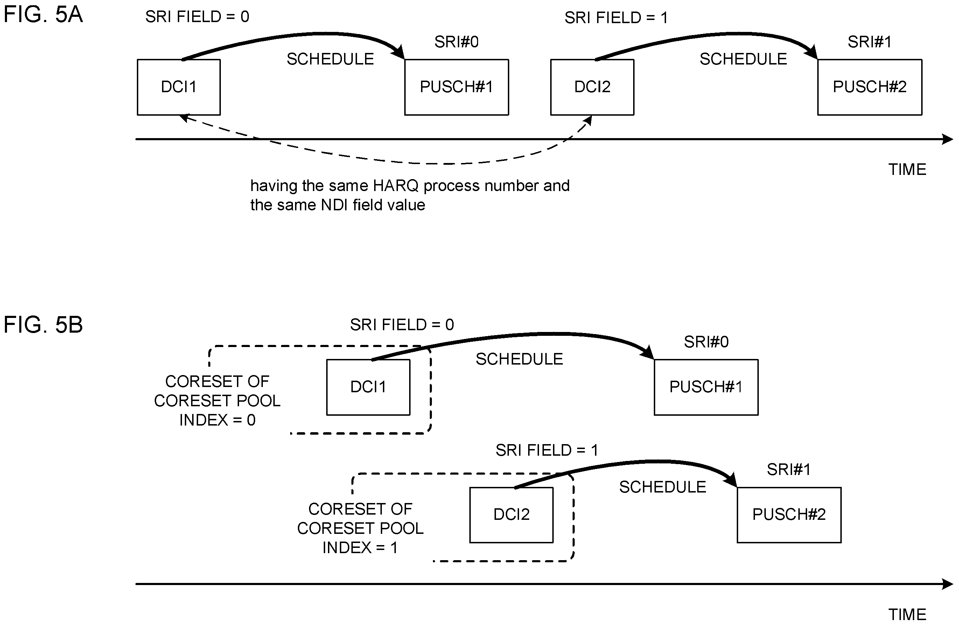

Figs. 5A and 5B are diagrams illustrating examples of problems in a case where transmission for the M-TRP is performed using the existing Rel. 15/16 specification. In this example, it is assumed that the value = 0 of the SRI field of the DCI corresponds to SRI#0, and the value = 0 of the SRI field corresponds to SRI#1.

Fig. 5A corresponds to a case where transmission for the M-TRP is performed using the existing Rel. 15 specification. In this example, PUSCH #1 corresponding to SRI#0 is scheduled by using a given DCI (DCI1), and PUSCH #2 corresponding to SRI#1 is scheduled by using another DCI (DCI2).

Here, the DCI1 and the DCI2 have the same HARQ process ID (or HARQ process number) and indicate values of the same New Data Indicator (NDI) field. That is, PUSCH #2 means retransmission of the same data (transport block) as PUSCH #1. According to this example, PUSCH of the same data can be transmitted (retransmission, repetition transmission) using different beams (SRI) at short intervals.

On the other hand, in Rel. 15, DCI2 for scheduling another PUSCH #2 cannot be issued (notified) unless PUSCH #1 is transmitted, which is not preferable when PUSCH #1 and PUSCH #2 are transmitted with a small time difference.

Fig. 5B corresponds to a case where transmission for the M-TRP is performed using the existing Rel. 16 specification. In this example, PUSCH #1 corresponding to SRI#0 is scheduled by using DCI (DCI1) detected in a CORESET with a control resource set (COntrol REsource SET (CORESET)) pool index = 0, and PUSCH #2 corresponding to SRI#1 is scheduled by using DCI (DCI2) detected in a CORESET with a CORESET pool index = 1.

In Rel. 16, when PUSCHs associated with different values of the CORESET pool index are scheduled, and the first PUSCH is scheduled by a CORESET (first PDCCH) of a value of one of the CORESET pool indexes, the UE may schedule a second PUSCH that starts before the end of the first PUSCH by a CORESET (second PDCCH) of a value of the other CORESET pool index that ends after the first PDCCH. Fig. 5B corresponds to this case.

That is, in Rel. 16, even before completion of transmission of the PUSCH #1 scheduled by the DCI #1, the DCI #2 for scheduling another PUSCH #2 can be issued (notified) in a case where the CORESET pool indexes of these DCIs are different.

However, according to the existing Rel. 15/16 specification, since the correspondence between the SRI field and the SRI is commonly configured regardless of the CORESET pool index in which the DCI is detected (corresponding to the SRI in the same SRS resource set), flexible transmission for the M-TRPs cannot be realized. The same applies to a transmit power control (TPC) related parameter corresponding to the SRI field.

Therefore, according to the existing Rel. 15/16 specification, UL transmission over the M-TRP is not appropriately performed, and throughput may be reduced or communication quality may be degraded.

Therefore, the present inventors have conceived a method for controlling UL transmission over M-TRPs. According to an aspect of the present disclosure, for example, the UE may use different beams to perform UL transmissions for multi-TRPs.

Hereinafter, embodiments according to the present disclosure will be described in detail with reference to the drawings. The radio communication method according to each of the embodiments may be applied independently, or may be applied in combination with others.

In the present disclosure, "A/B" and "at least one of A and B" may be interchangeable.

In the present disclosure, activate, deactivate, instruct (or indicate), select, configure, update, determine, and the like may be replaced with each other.

In the present disclosure, the RRC, the RRC parameter, the RRC message, the RRC signaling, the higher layer parameter, the information element (IE), and the configuration may be replaced with each other. In the present disclosure, the MAC CE, the update command, the activation/deactivation command may be replaced with each other. In the present disclosure, "support", "control", "controllable", "operate", and "operable" may be replaced with each other.

In the present disclosure, a panel, a beam, a panel group, a beam group, a precoder, an uplink (UL) transmission entity, a TRP, spatial relation information (SRI), spatial relation, an SRS Resource Indicator (SRI), an SRS resource, a control resource set (COntrol REsource SET (CORESET)), a physical downlink shared channel (PDSCH), a codeword, a base station, a given antenna port (for example, a DeModulation Reference Signal (DMRS) port), a given antenna port group (for example, a DMRS port group), a given group (for example, a Code Division Multiplexing (CDM) group, a given reference signal group, and a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state, a common TCI state, a QCL, a QCL assumption and the like may be replaced with each other.

Further, the TCI state identifier (ID) and the TCI state may be replaced with each other. The TCI state and the TCI may be replaced with each other.

In the present disclosure, the index, the ID, the indicator, the resource ID may be replaced with each other. In the present disclosure, the sequence, the list, the set, the group, the cohort, the cluster, the subset, and the like may be replaced with each other.

In the present disclosure, the TRP index, the CORESET pool index (CORESETPoolIndex), the pool index, the group index, and the like may be replaced with each other.

In the present disclosure, a single PDCCH (DCI) may be referred to as a PDCCH (DCI) of a first scheduling type (for example, scheduling type A (or type 1)). In addition, multi-PDCCHs (DCI) may be referred to as a PDCCH (DCI) of a second scheduling type (for example, scheduling type B (or type 2)).

In the present disclosure, regarding the single DCI, an i-th TRP (TRP #i) may mean an i-th TCI state, an i-th CDM group, and the like (i is an integer). Regarding multi-DCI, an i-th TRP (TRP #i) may mean a CORESET corresponding to a CORESET pool index = i, an i-th TCI state, an i-th CDM group, and the like (i is an integer).

In the present disclosure, the single PDCCH may be assumed to be supported when multi-TRPs use ideal backhaul. The multi-PDCCHs may be assumed to be supported when the multi-TRPs use non-ideal backhaul.

Note that the ideal backhaul may be referred to as a DMRS port group type 1, a reference signal related group type 1, an antenna port group type 1, a CORESET pool type 1, and the like. The non-ideal backhaul may be referred to as a DMRS port group type 2, a reference signal related group type 2, an antenna port group type 2, a CORESET pool type 2, and the like. The name is not limited thereto.

In the present disclosure, the multi-TRP (MTRP, M-TRP), the multi-TRP system, the multi-TRP transmission, and the multi-PDSCH may be replaced with each other.

In the present disclosure, the single DCI (sDCI), the single PDCCH, the single DCI-based multi-TRP system, the sDCI-based MTRP, scheduling a plurality of PUSCHs by one DCI, sDCI-based MTRP transmission, and activating the two TCI states on at least one TCI codepoint may be replaced with each other.

In the present disclosure, the multi-DCI (mDCI), the multi-PDCCHs, the multi-DCI-based multi-TRP system, the mDCI-based MTRP, mDCI-based MTRP transmission, scheduling a plurality of PUSCHs by two DCIs, and configuring two CORESET pool indexes or CORESET pool index = 1 (or a value of 1 or more) may be replaced with each other.

The repetition of the present disclosure may be read as MTRP-based repetition, Rel. 17 repetition, repetition applying different spatial relations, repetition PUSCH, repetition PUCCH, repetition transmission, and the like. Further, the repetition transmission in the following embodiments may correspond to at least one of a repetition transmission type A, a repetition transmission type B, and other repetition transmission types.

Note that the PUSCH in the following embodiments may be a repetition PUSCH, but may not be a repetition PUSCH (may be a PUSCH with a single transmission count).

In addition, the SRS resource set in the following embodiments may be read as an SRS resource set whose usage is a codebook or a non-codebook, or may be read as an SRS resource set for other usages.

Note that, in the present disclosure, hereinafter, "CORESET pool index = 0 is configured" may be read as "CORESET pool index = 0 is configured or CORESET pool index is not configured".

### (Radio Communication Method)

### <First Embodiment>

A first embodiment describes a case where multi-DCI is used for the M-TRP. In this case, at least one CORESET whose CORESET pool index (RRC parameter "CORESETPoolIndex") has a value of 1 or more is configured for the UE.

In the first embodiment, the UE may determine the SRI of the PUSCH based on the CORESET pool index of the CORESET for the DCI (for example, the DCI is detected) for scheduling the PUSCH.

The UE may determine the SRI only when the CORESET pool index is configured for at least one CORESET in a given BWP/given component carrier. Further, the UE may determine the SRI only in a case of a PUSCH scheduled by the DCI detected in the CORESET in which a CORESET pool index is configured.

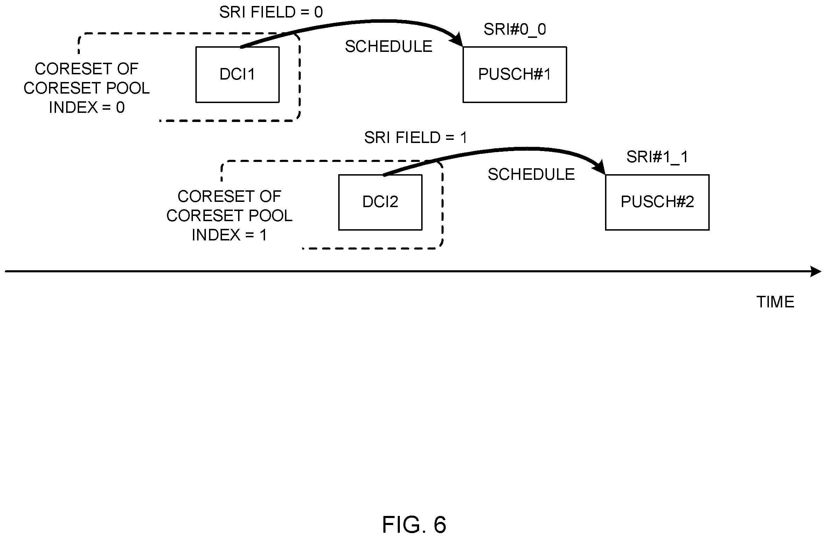

Fig. 6 is a diagram illustrating an example of control of the SRI of the PUSCH according to the first embodiment. In this example, PUSCH #1 corresponding to SRI #0_0 is scheduled by using DCI (DCI1) detected in a CORESET with a CORESET pool index = 0, and PUSCH #2 corresponding to SRI #1_1 is scheduled by using DCI (DCI2) detected in a CORESET with a CORESET pool index = 1.

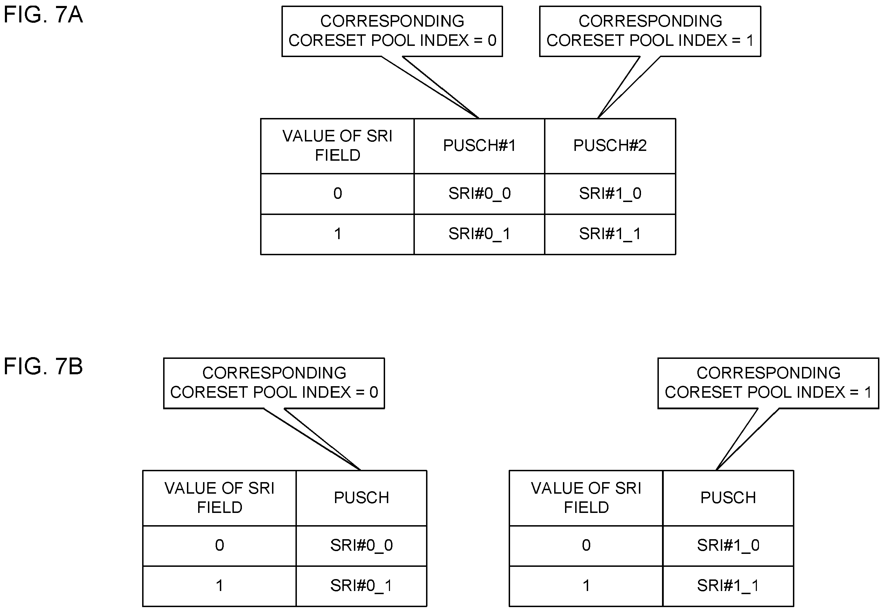

The correspondence among the DCI, the value of the SRI field, and the SRI is different for each CORESET pool index as described later in Figs. 7A and 7B, unlike the case of Fig. 5B.

Figs. 7A and 7B are diagrams illustrating an example of a correspondence between a value of an SRI field and an SRI according to the first embodiment. Note that, in the present disclosure, SRI #i_j (where i and j are numbers) may mean the j-th SRI corresponding to the CORESET pool index = i. SRI #i_j may be configured/activated by higher layer signaling explicitly or implicitly associated with the CORESET pool index.

Fig. 7A illustrates an example in which a plurality of (in this example, two) SRIs corresponding to one SRI code point (field value) are configured by higher layer signaling (for example, RRC signaling). PUSCH #k (k-th PUSCH) (k is an integer) may mean the SRI corresponding to the k-th TRP, or may mean the SRI corresponding to the k-th repetition. PUSCH #i may be replaced with the i-th SRI. Note that the present disclosure can also be applied to a case where a third or subsequent PUSCH is defined.

The UE may determine the SRI with reference to the first SRI for a PUSCH scheduled in a CORESET with a CORESET pool index = 0. The UE may determine the SRI with reference to the second SRI for a PUSCH scheduled in a CORESET with a CORESET pool index = 1. According to such a configuration, the SRI can be flexibly instructed for the M-TRP (when a different CORESET pool index is used) without increasing the field size of the DCI.

In Fig. 7A, SRI #0_0 and SRI #1_0 are configured in association with the value of the SRI field = 0. For example, SRI #0_0 corresponding to PUSCH #1 is applied to a PUSCH scheduled by the DCI with the value of the SRI field = 0 detected in the CORESET with the CORESET pool index = 0. In Fig. 6, because DCI1 has the value of the SRI field = 0 and DCI2 has the value of the SRI field = 1, SRI #0_0 is applied to PUSCH #1 and SRI #1_1 is applied to PUSCH #2 with reference to Fig. 7A.

In Fig. 7A, the CORESET pool index may not be explicitly associated with SRI #i_j, for example, it may be determined that the i-th SRI corresponding to a given value of an SRI field is associated with the CORESET pool index = i. On the other hand, as shown in Fig. 7B, SRI #i_j associated with a given CORESET pool index may be explicitly configured for the UE.

Note that, in this example, a case where two SRS resources are configured for the SRS resource set of usage = codebook (CB) (the size of the SRI field is 1 bit) has been described, but the present disclosure is not limited thereto. For example, even when one SRS resource is configured (the size of the SRI field is 0 bits) for the SRS resource set of the usage = codebook, the SRI of the PUSCH may be configured for each CORESET pool index, and may be determined based on the CORESET pool index in which the DCI for scheduling the PUSCH has been detected.

According to the first embodiment described above, the SRI for the M-TRPs can be appropriately determined.

### <Modification of First Embodiment>

Note that the CORESET pool index of the first embodiment may be replaced with a TCI state ID or a CORESET index. For example, the UE may determine the SRI of the PUSCH based on the TCI state ID or the CORESET ID of the CORESET for the DCI (for example, the DCI is detected) for scheduling the PUSCH. The TCI state ID may be replaced with a QCL assumption.

In a modification of the first embodiment, even if different CORESET pool indexes (or CORESET pool indexes having one or more values) are not configured, the UE can determine the SRI (or TCI state) of the PUSCH based on the CORESET in which the DCI for scheduling the PUSCH has been detected.

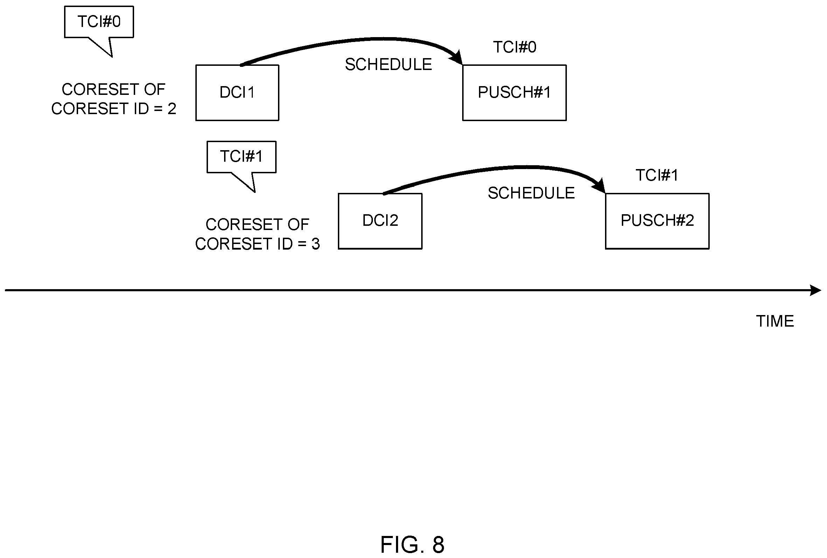

Fig. 8 is a diagram illustrating an example of a correspondence between a value of an SRI field and an SRI according to the modification of the first embodiment. This example is similar to Fig. 6, except that DCI1 is detected in a CORESET with CORESET ID = 2 and DCI2 is detected in a CORESET with CORESET ID = 3.

Here, assuming that the TCI state corresponding to the CORESET of CORESET = 2 corresponds to TCI #0 (TCI ID = 0) and the TCI state corresponding to the CORESET of CORESET = 3 corresponds to TCI #1, the UE may apply TCI #0 as the SRI of PUSCH #1 scheduled by DCI1 and apply TCI #1 as the SRI of PUSCH #2 scheduled by DCI2.

Note that the CORESET pool index of another embodiment of the present disclosure may also be replaced with a TCI state ID or a CORESET index.

### <Second Embodiment>

A second embodiment describes a case where multi-DCI is used for the M-TRP.

In the second embodiment, the UE may determine the transmit power of the PUSCH based on the CORESET pool index of the CORESET for the DCI (for example, the DCI is detected) for scheduling the PUSCH. For example, the UE may determine the transmit power control (TPC)-related parameter of the PUSCH based on the CORESET pool index of the CORESET that detects DCI for scheduling the PUSCH.

Here, the transmit power control (TPC)-related parameter may be, for example, at least one of α, P0, a closed-loop power control state, and a pathloss reference signal (PL-RS), or may be an index related to at least one of these. Hereinafter, the TPC-related parameter is also referred to as a power control parameter. It will be understood by a person skilled in the art that a value obtained based on these is used in a calculation formula of the transmit power of the PUSCH.

The UE may determine the transmit power only when the CORESET pool index is configured for at least one CORESET in a given BWP/given component carrier. Further, the UE may determine the transmit power only in a case of a PUSCH scheduled by the DCI detected in the CORESET in which a CORESET pool index is configured. Note that the determination of the transmit power may be used in a case where the SRI correspondence is configured for each CORESET pool index as described in the first embodiment, or may be used in a case where the SRI correspondence is not configured.

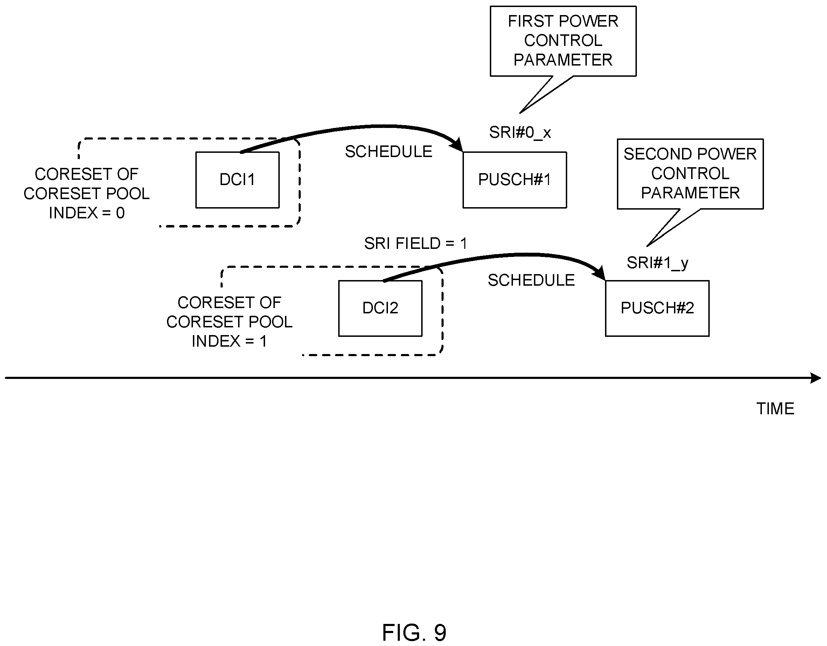

Fig. 9 is a diagram illustrating an example of control of the transmit power of the PUSCH according to the second embodiment. In this example, PUSCH #1 corresponding to SRI #0_x (x is an integer) is scheduled by using DCI (DCI1) detected in a CORESET with a CORESET pool index = 0, and PUSCH #2 corresponding to SRI #1_y (y is an integer) is scheduled by using DCI (DCI2) detected in a CORESET with a CORESET pool index = 1.

The UE derives transmit power of PUSCH #1 based on the first power control parameter associated with CORESET pool index = 0. In addition, the UE derives transmit power of PUSCH #2 based on the second power control parameter associated with CORESET pool index = 1.

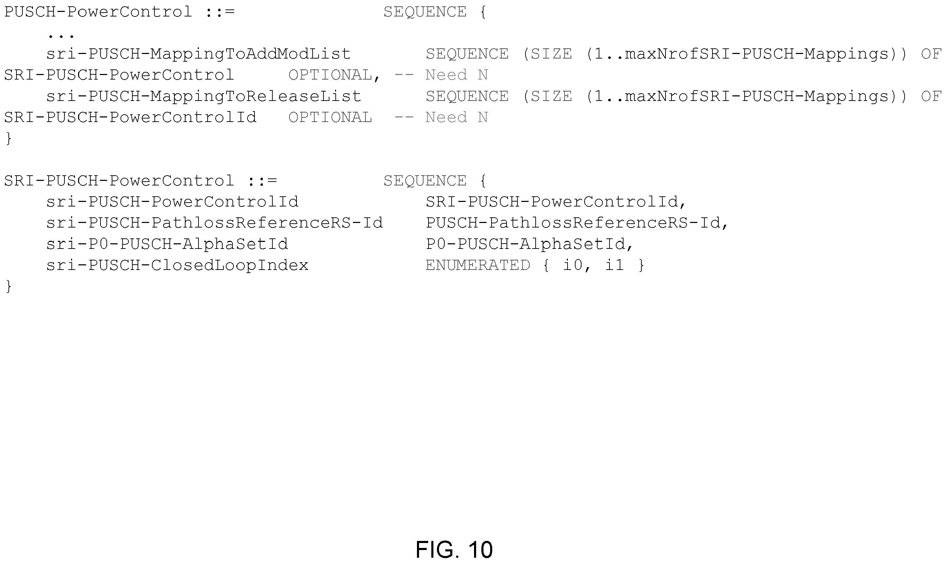

Fig. 10 is a diagram illustrating an example of configuration of power control parameters in the existing Rel. 15/16 NR. This example is described using Abstract Syntax Notation One (ASN.1) notation (Note that, since this is merely an example, there is a possibility that this is not a complete description). The following drawings may also be described using the ASN.1 notation.

Note that, in the present disclosure, the name of the RRC information element, the RRC parameter, or the like may be given a suffix (for example, "_r16", "_r17", "-r16", "-r17", or the like) indicating that the RRC information element, the RRC parameter, or the like has been introduced in a particular resource. The suffix may not be added, or another word may be added.

In the existing Rel. 15/16 NR, the configuration of the power control parameter of the PUSCH (information element of RRC "PUSCH-PowerControl") may include a list (sri-PUSCH-MappingToAddModList) for configuring a correspondence between an SRI and a power control parameter (SRI-PUSCH-PowerControl) and a list (sri-PUSCH-MappingToReleaseList) for releasing the correspondence. The SRI field and the ID of the power control parameter (SRI-PUSCH-PowerControlId) are associated by sri-PUSCH-MappingToAddModList.

SRI-PUSCH-PowerControl may include an ID of a power control parameter, a parameter indicating an ID of a PL-RS (sri-PUSCH-PathlossReferenceRS-Id), a parameter indicating an ID of a set of P0 and α (sri-P0-PUSCH-AlphaSetId), and a parameter indicating an index of a closed-loop power control state (sri-PUSCH-ClosedLoopIndex).

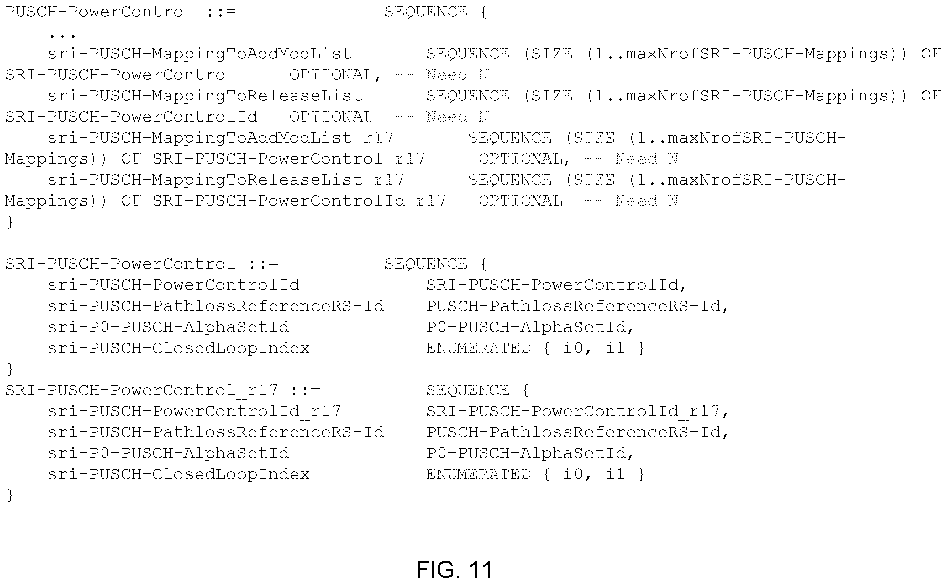

Fig. 11 is a diagram illustrating an example of configuration of power control parameters according to the second embodiment. In this example, the existing sri-PUSCH-MappingToAddModList, sri-PUSCH-MappingToReleaseList, and SRI-PUSCH-PowerControl illustrated in Fig. 10 are used for configuring the first power control parameter related to the CORESET pool index = 0.

On the other hand, sri-PUSCH-MappingToAddModList_r17, sri-PUSCH-MappingToReleaseList_r17, and SRI-PUSCH-PowerControl_r17 are used to configure the second power control parameter related to the CORESET pool index = 1. The ID of the power control parameter of SRI-PUSCH-PowerControl_r17 may be identified by SRI-PUSCH-PowerControlId_r17 or may be identified by SRI-PUSCH-PowerControlId.

For example, assuming that the correspondence between the value of the SRI field and the SRI is configured as illustrated in Fig. 7A, when applying SRI #0_0 or SRI #0_1 to the PUSCH, the UE may derive the transmit power of the PUSCH based on the first power control parameter. Further, when applying SRI #1_0 or SRI #1_1 to the PUSCH, the UE may derive the transmit power of the PUSCH based on the second power control parameter.

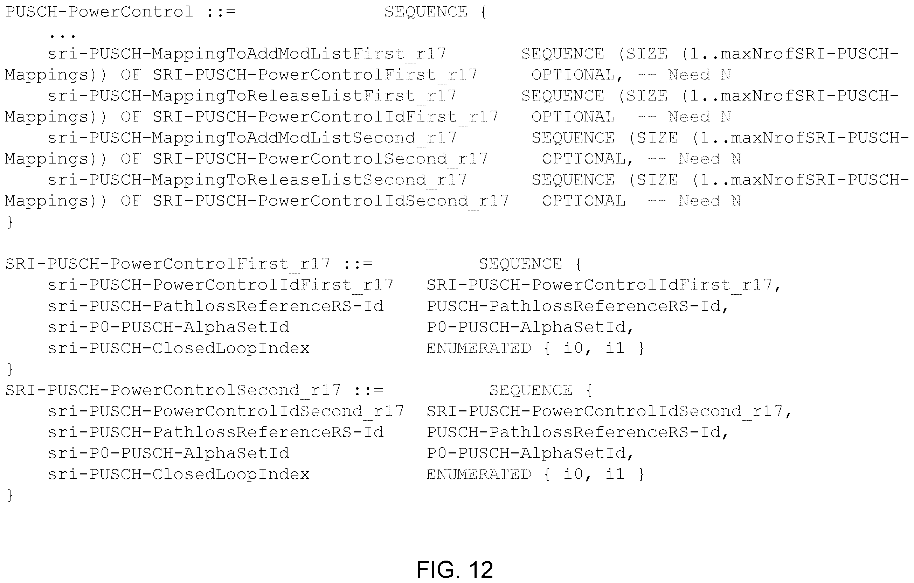

Fig. 12 is a diagram illustrating another example of configuration of power control parameters according to the second embodiment. In this example, sri-PUSCH-MappingToAddModListFirst_r17, sri-PUSCH-MappingToReleaseListFirst_r17, and SRI-PUSCH-PowerControlFirst_r17 are used to configure the first power control parameter related to the CORESET pool index = 0. The ID of the power control parameter of SRI-PUSCH-PowerControlFirst_r17 may be identified by SRI-PUSCH-PowerControlIdFirst_r17 or may be identified by SRI-PUSCH-PowerControlId.

On the other hand, sri-PUSCH-MappingToAddModListSecond_r17, sri-PUSCH-MappingToReleaseListSecond_r17, and SRI-PUSCH-PowerControlSecond_r17 are used to configure the second power control parameter related to the CORESET pool index = 1. The ID of the power control parameter of SRI-PUSCH-PowerControlSecond_r17 may be identified by SRI-PUSCH-PowerControlIdSecond_r17 or may be identified by SRI-PUSCH-PowerControlId.

For example, assuming that the correspondence between the value of the SRI field and the SRI is configured as illustrated in Fig. 7A, when applying SRI #0_0 or SRI #0_1 to the PUSCH, the UE may derive the transmit power of the PUSCH based on the first power control parameter. Further, when applying SRI #1_0 or SRI #1_1 to the PUSCH, the UE may derive the transmit power of the PUSCH based on the second power control parameter.

According to the second embodiment described above, the transmit power for the M-TRPs can be appropriately determined.

### <Third Embodiment>

A third embodiment describes a case where single DCI is used for the M-TRP.

Even in the single DCI-based M-TRP, different SRIs may be applied to a plurality of PUSCHs (for the M-TRP) scheduled by the single DCI. In this case, the UE may determine the transmit power of the PUSCH based on the SRI applied to the PUSCH.

The third embodiment may be achieved in a mode in which the configuration of the power control parameter for each CORESET pool index in the second embodiment described above is replaced with, for example, the configuration of the power control parameter for each TRP (for each SRI set).

The first SRI (the set of SRIs for the first PUSCH) and the second SRI (the set of SRIs for the second PUSCH) may each be configured/activated for the UE by higher layer signaling (for example, RRC signaling, MAC CE, and the like).

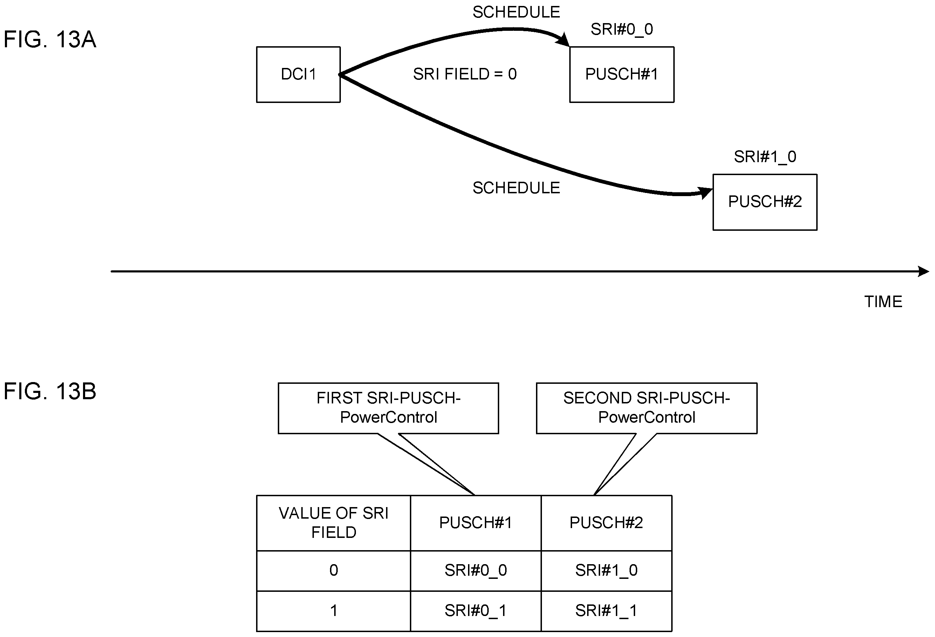

Figs. 13A and 13B are diagrams illustrating an example of control of the transmit power of the PUSCH according to the third embodiment. In this example, PUSCH #1 and #2 are scheduled by using DCI (DCI1) as illustrated in Fig. 13A. The value of the SRI field in DCI1 = 0.

Fig. 13B is a diagram illustrating an example of a correspondence between a value of an SRI field and an SRI. The value of the SRI field may be associated with different SRIs for each of PUSCH #1 and #2. In the example of Fig. 13A, the SRI field = 0 of DCI1 may instruct application of SRI #0_0 to PUSCH #1 and application of SRI #1_0 to PUSCH #2.

In addition, Fig. 13B also illustrates a power control parameter corresponding to the SRI. When applying SRI #0_0 or SRI #0_1 to the PUSCH, the UE may derive the transmit power of the PUSCH based on the first power control parameter (for example, SRI-PUSCH-PowerControl, SRI-PUSCH-PowerControlFirst_r17). In addition, when applying SRI #1_0 or SRI #1_1 to the PUSCH, the UE may derive the transmit power of the PUSCH based on the second power control parameter (for example, SRI-PUSCH-PowerControl_r17, SRI-PUSCH-PowerControlSecond_r17).

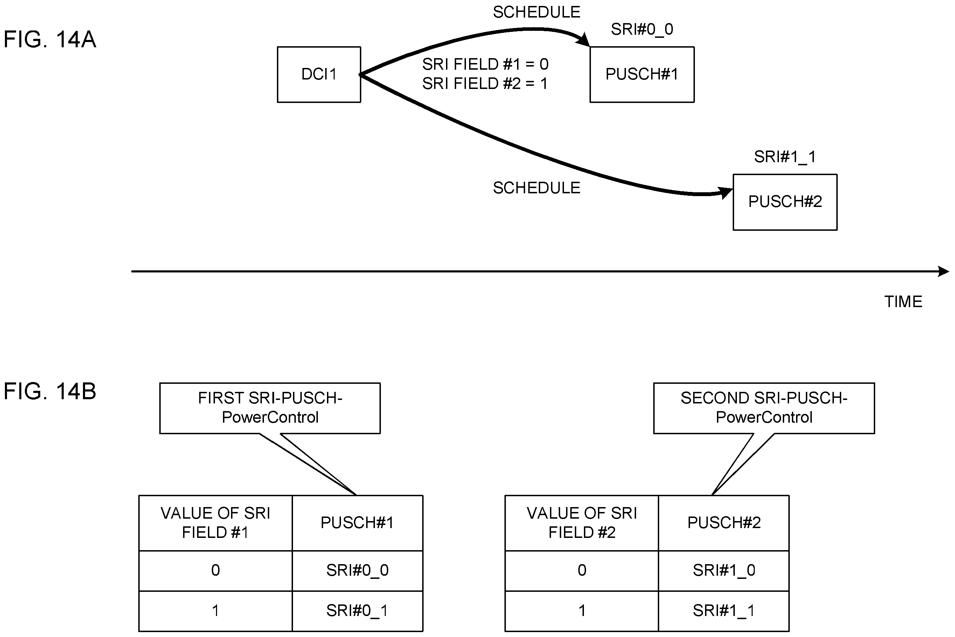

Figs. 14A and 14B are diagrams illustrating another example of control of the transmit power of the PUSCH according to the third embodiment. In this example, PUSCH #1 and #2 are scheduled by using DCI (DCI1) as illustrated in Fig. 14A. Fig. 14A is different from Fig. 13A in that DCI1 has two SRI fields (SRI field #1, #2).

Fig. 14B is a diagram illustrating an example of a correspondence between a value of an SRI field and an SRI. The value of the SRI field #1 may be associated with the SRI for the PUSCH #1. The value of the SRI field #2 may be associated with the SRI for the PUSCH #2. In the example of Fig. 14A, the SRI field #1 = 0 may instruct application of the SRI #0_0 to the PUSCH #1, and the SRI field #2 = 1 may instruct application of the SRI #1_1 to the PUSCH #2.

In addition, Fig. 14B also illustrates a power control parameter corresponding to the SRI. When applying SRI #0_0 or SRI #0_1 to the PUSCH, the UE may derive the transmit power of the PUSCH based on the first power control parameter (for example, SRI-PUSCH-PowerControl, SRI-PUSCH-PowerControlFirst_r17). In addition, when applying SRI #1_0 or SRI #1_1 to the PUSCH, the UE may derive the transmit power of the PUSCH based on the second power control parameter (for example, SRI-PUSCH-PowerControl_r17, SRI-PUSCH-PowerControlSecond_r17).

According to the third embodiment described above, the transmit power for the single DCI-based M-TRPs can be appropriately determined.

### <Fourth Embodiment>

A fourth embodiment relates to switching between sDCI-based MTRP and mDCI-based MTRP. Hereinafter, the sDCI-based MTRP, the mDCI-based MTRP, and the like are also referred to as MTRP schemes.

### [Embodiment 4.1]

The UE may assume that any one of MTRP schemes is configured by RRC signaling. When it is necessary to switch these MTRP schemes, the RRC parameter indicating one of the MTRP schemes may be reconfigured in the UE.

### [Embodiment 4.2]

The UE may assume any one of the MTRP schemes to be activated/designated by the MAC CE/DCI. The MAC CE may be a dedicated MAC CE for designating (or switching) an MTRP scheme, or may be a MAC CE for other usage. The MTRP scheme may be designated by a value of a specific field (for example, the MTRP scheme field) included in the MAC CE. A specific field (for example, the MTRP scheme field, any existing field) of the DCI may indicate a given MTRP scheme or may indicate that the MTRP scheme is switched.

### [Embodiment 4.3]

The UE may assume that a plurality of MTRP schemes are configured by RRC signaling.

In Embodiment 4.3, the UE may assume that a CORESET with a CORESET pool index configured operates for mDCI-based MTRP (for example, the CORESET may be used to monitor mDCI).

In Embodiment 4.3, the UE may assume that a CORESET for which a CORESET pool index is not configured operates for sDCI-based MTRP (for example, the CORESET may be used to monitor sDCI). Note that the UE may assume that the CORESET operates for the sDCI-based MTRP in a case where the CORESET pool index is not configured and two or more TCI states are activated (two or more TCI states correspond) for at least one of the code points of the TCI field for (the DCI of) the CORESET.

Note that, in the existing Rel. 16, a CORESET for which a CORESET pool index is not configured is considered as a CORESET with a CORESET pool index = 0 (in other words, the same operation/handling as a CORESET with CORESET pool index = 0 is assumed). On the other hand, in Embodiment 4.3, such consideration/assumption is not performed, and the UE considers (or handles) the CORESET for which the CORESET pool index is not configured as a CORESET for sDCI-based MTRP.

Therefore, higher layer parameters (for example, a parameter "EnableS-DCI" that enables sDCI-based MTRP) may be introduced for switching between the Rel. 16 operation and the operation of Embodiment 4.3. When the higher layer parameter is configured, the UE may consider (does not handle the same as the CORESET with CORESET pool index = 0) that a CORESET for which a CORESET pool index is not configured operates for sDCI-based MTRP, and otherwise, similarly to Rel. 16, a CORESET for which a CORESET pool index is not configured may be handled the same as the CORESET with CORESET pool index = 0.

Note that the "sDCI-based MTRP" in Embodiment 4.3 may be replaced with a "single TRP" or a "PUSCH for a single TRP".

According to the fourth embodiment described above, since the first and second power control parameters described in the second and third embodiments can be commonly used in the control of both the sDCI-based MTRP and the mDCI-based MTRP (may not be individually configured), the configuration of the RRC parameter can be simplified, and an increase in communication overhead related to notification of RRC can be reduced.

### <Others>

Note that at least one of the above-described embodiments may be applied only to a UE that supports a particular UE capability or a UE that has reported (to support) the particular UE capability.

The particular UE capability may indicate at least one of the followings:
- whether to support association of a CORESET pool index with an SRI;
- whether to support association of a CORESET pool index with a power control parameter;
- whether to support a configuration of a plurality of SRI-PUSCH-PowerControl;
- whether to support a plurality of different associations for PUSCH and SRI in sDCI-based MTRP;
- whether to support switching between sDCI-based MTRP and mDCI-based MTRP;
- maximum number of supported power control parameters.

Note that the maximum number of supported power control parameters may be counted as 2 when the UE supports the configuration of SRI-PUSCH-PowerControlFirst_r17 and SRI-PUSCH-PowerControlSecond_r17. Further, when the UE supports the configuration of the SRI-PUSCH-PowerControl of Rel. 15/16 and SRI-PUSCH-PowerControl_r17 of Rel. 17, the maximum number of supported power control parameters may be counted as 2, or may be counted as 1 excluding the SRI-PUSCH-PowerControl of Rel. 15/16.

Furthermore, at least one of the above-described embodiments may be applied when the UE configures specific information related to the foregoing embodiments by higher layer signaling (If not set, for example, the operation of Rel. 15/16 is applied.). For example, the specific information may be a plurality of power control parameters, any RRC parameter for a specific release (for example, Rel. 17), or the like.

Further, each of the above embodiments may be applied to a case where (the operation of) multi-TRPs or multiple panels are configured in the UE, or may be applied to other cases.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

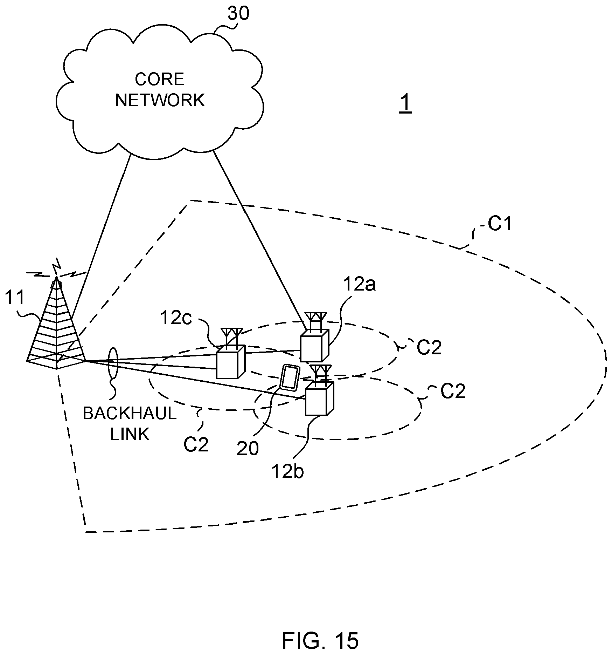

Fig. 15 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first Frequency Range 1 (FR1) and a second Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, the FR1 may correspond to a frequency range higher than the FR2.

Further, the user terminal 20 may perform communication in each CC by using at least one of Time Division Duplex (TDD) and Frequency Division Duplex (FDD).

The plurality of base stations 10 may be connected in a wired (e.g., an optical fiber or an X2 interface in compliance with common public radio interface (CPRI)) or wireless manner (e.g., NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), and a Next Generation Core (NGC), or the like.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like, may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like, shared by the user terminals 20 may be used.

Further, in the radio communication system 1, as an uplink channel, a physical uplink shared channel (PUSCH), a physical uplink control channel (PUCCH), a physical random access channel (PRACH), or the like, shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted by the PDCCH. The lower layer control information may include, for example, Downlink Control Information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that PDSCH is interchangeable with DL data, and PUSCH is interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that "search space" and "search space set", "search space configuration", "search space set configuration", "CORESET" and "CORESET configuration", and the like, in the present disclosure are interchangeable.

Uplink Control Information (UCI) including at least one of Channel State Information (CSI), delivery acknowledgement information (which may be referred to as, for example, a Hybrid Automatic Repeat reQuest ACKnowledgement (HARQ-ACK), ACK/NACK, or the like), and a Scheduling Request (SR) may be transmitted by the PUCCH. A random access preamble for establishing connection with a cell may be transmitted on the PRACH.

Note that in the present disclosure, downlink, uplink, and the like may be expressed without "link". Various channels may also be expressed without adding "physical" in front of the channels.

In the radio communication system 1, a synchronization signal (SS), a downlink reference signal (DL-RS), and the like, may be transmitted. In the radio communication system 1, a Cell-Specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like, may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

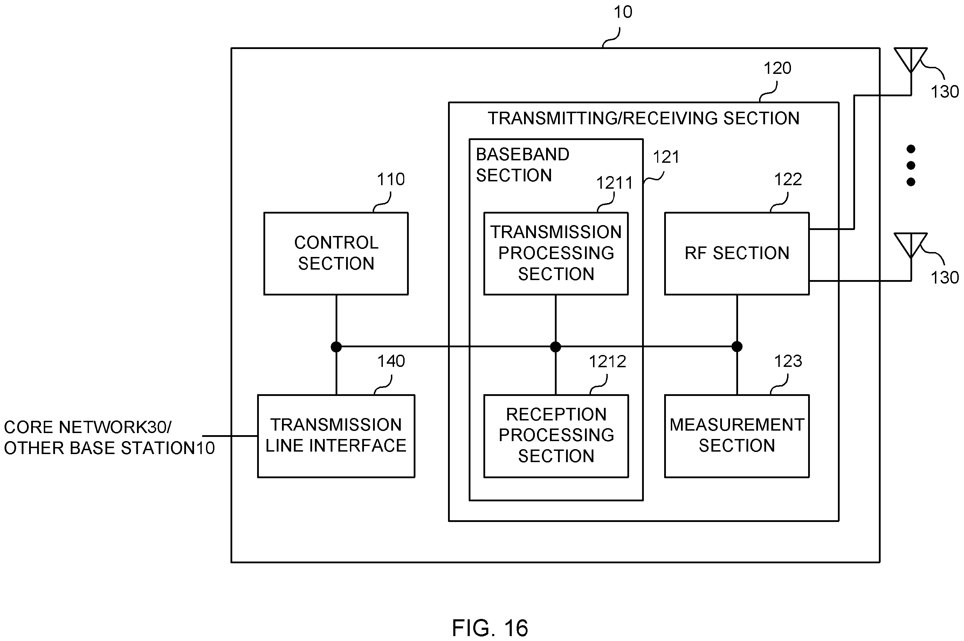

Fig. 16 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may also be provided.

Note that this example mainly describes a functional block which is a characteristic part of the present embodiment, and it may be assumed that the base station 10 also has another functional block necessary for radio communication. A part of processing of each unit described below may be omitted.

The control section 110 controls the entire base station 10. The control section 110 can be constituted by a controller, a control circuit, and the like that are described based on common recognition in the technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmitting/receiving circuit, and the like, which are described based on common recognition in the technical field pertaining to the present disclosure.

The transmitting/receiving section 120 may be configured as an integrated transmitting/receiving section or may be configured by a transmitting section and a receiving section. The transmitting section may include the transmission processing section 1211 and the RF section 122. The receiving section may be implemented by the reception processing section 1212, the RF section 122, and the measurement section 123.

The transmitting/receiving antenna 130 can be constituted by an antenna, for example, an array antenna or the like, which is described based on common recognition in the technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, on, for example, data, control information, and the like, acquired from the control section 110, to generate a bit string to be transmitted.

The transmitting/receiving section 120 (transmission processing section 1211) may perform transmission processing such as channel encoding (which may include error correction encoding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like, on the baseband signal and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be outputted to the control section 110.

The transmission line interface 140 may transmit/receive a signal (backhaul signaling) to and from an apparatus included in the core network 30, another base stations 10, and the like, and may acquire, transmit, and the like, user data (user plane data), control plane data, and the like, for the user terminal 20.

Note that the transmitting section and the receiving section of the base station 10 in the present disclosure may include at least one of the transmitting/receiving section 120, the transmitting/receiving antenna 130, and the transmission line interface 140.

Note that the transmitting/receiving section 120 may transmit downlink control information (DCI) used to determine spatial relation information for an uplink shared channel (Physical Uplink Shared Channel (PUSCH)) to the user terminal 20 in a given control resource set (CONtrol REsource SET (CORESET)).

The transmitting/receiving section 120 may receive the PUSCH transmitted by the user terminal 20 using a precoder based on the spatial relation information.

### (User Terminal)

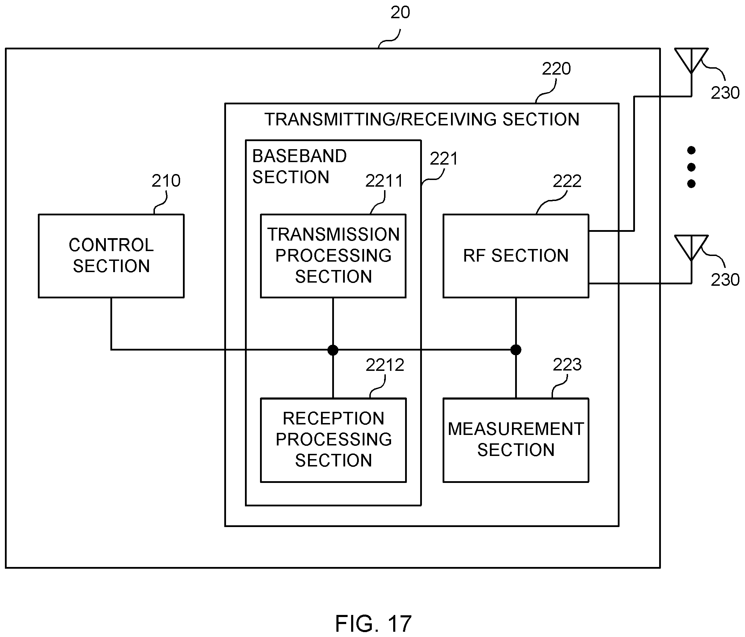

Fig. 17 is a diagram illustrating an example of a configuration of the user terminal according to one embodiment. The user terminal 20 includes a control section 210, a transmitting/receiving section 220, and a transmitting/receiving antenna 230. Note that one or more control sections 210, one or more transmitting/receiving sections 220, and one or more transmitting/receiving antennas 230 may be provided.

Note that the example mainly indicates functional blocks of characteristic parts of the present embodiment. The user terminal 20 may be assumed to have other functional blocks necessary for radio communication. A part of processing of each section described below may be omitted.

The control section 210 controls the entire user terminal 20. The control section 210 can include a controller, a control circuit, and the like, which are described based on common recognition in the technical field according to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described based on common recognition in the technical field according to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (e.g., precoding), analog beam forming (e.g., phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like on, for example, data, control information, and the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on the bit string to be transmitted to output a baseband signal.

Note that whether or not to apply DFT processing may be determined based on configuration of transform precoding. When transform precoding is enabled for a given channel (e.g., PUSCH), the transmitting/receiving section 220 (transmission processing section 2211) may perform the DFT processing as the above-described transmission processing in order to transmit the channel by using a DFT-s-OFDM waveform. Otherwise, the DFT processing is not required to be performed as the above-described transmission processing.

The transmitting/receiving section 220 (RF section 222) may perform modulation to a radio frequency range, filtering processing, amplification, and the like on a base band signal, and transmit a signal in the radio frequency range via the transmitting/receiving antenna 230.

In contrast, the transmitting/receiving section 220 (RF section 222) may perform amplification, filtering processing, demodulation to a base band signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, and PDCP layer processing on the acquired base band signal to acquire user data and the like.

The transmitting/receiving section 220 (measurement section 223) may perform measurement on a received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmitting/receiving antenna 230.

Note that the control section 210 may determine spatial relation information for an uplink shared channel (Physical Uplink Shared Channel (PUSCH)) scheduled by downlink control information (DCI) based on a control resource set (CONtrol REsource SET (CORESET)) in which the DCI has been detected. The spatial relation information may be replaced with a measurement reference signal (Sounding Reference Signal (SRS)) resource indicator (SRS Resource Indicator (SRI)).

The transmitting/receiving section 220 may transmit the PUSCH by using a precoder (or a spatial domain transmission filter) based on the spatial relation information.

The control section 210 may determine the spatial relation information based on a CORESET pool index of the CORESET.

The control section 210 may determine the transmit power of the PUSCH based on a power control parameter (for example, the first and second power control parameters) configured for each CORESET pool index.

When a specific higher layer parameter (for example, a parameter "EnableS-DCI" that enables sDCI-based MTRP) is configured, the control section 210 may handle a CORESET for which a CORESET pool index is not configured as a CORESET for the single DCI-based multi-transmission and reception point.

### (Hardware Configuration)

Note that the block diagrams that have been used to describe the above embodiments illustrate blocks in functional sections. These functional blocks (components) may be implemented in any combination of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that has a transmission function may be referred to as a transmitting section, a transmitter, and the like. In any case, as described above, the implementation method is not particularly limited.

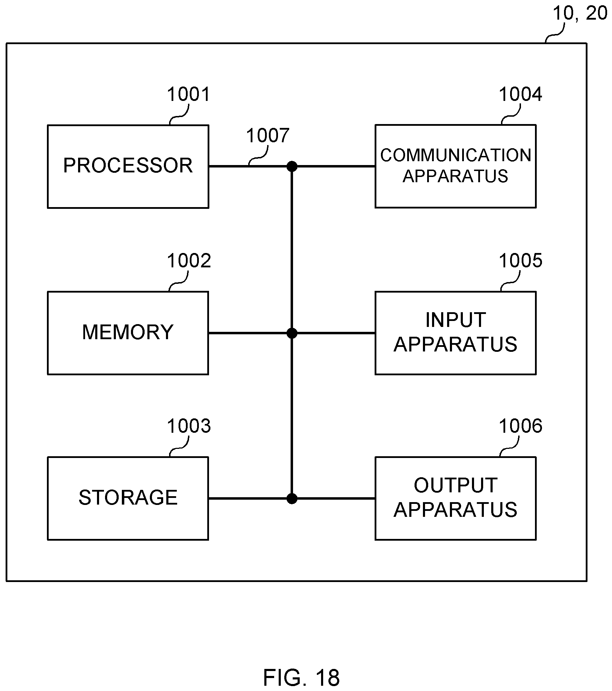

For example, the base station, the user terminal, and the like according to one embodiment of the present disclosure may function as a computer that executes the processing of the radio communication method of the present disclosure. Fig. 18 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a section can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) onto hardware such as the processor 1001 and the memory 1002 to perform the operation in the processor 1001, and controlling the communication through the communication apparatus 1004 and at least one of the reading and writing of data in the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least either the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a "secondary storage apparatus".

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, the apparatuses including the processor 1001, the memory 1002, or the like are connected by the bus 1007 so as to communicate information. The bus 1007 may be formed with a single bus, or may be formed with buses that vary between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in a time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as a "PDSCH (PUSCH) mapping type B".

A radio frame, a subframe, a slot, a mini slot, and a symbol all represent the time unit in signal transmission. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", or the like, instead of a "subframe."

Here, the TTI refers to a minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that the definition of TTIs is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may be referred to as a normal TTI (TTI in 3GPP Rel. 8 to 12), a normal TTI, a long TTI, a usual subframe, a normal subframe, a long subframe, a slot, or the like. A TTI that is shorter than the normal TTI may be referred to as a shortened TTI, a short TTI, a partial TTI (or fractional TTI), a shortened subframe, a short subframe, a mini slot, a subslot, a slot, or the like.

Note that the long TTI (for example, a normal TTI, a subframe, or the like) may be replaced with a TTI having a time duration exceeding 1 ms, and the short TTI (for example, a shortened TTI) may be replaced with a TTI having a TTI duration less than the TTI duration of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. A PRB may be defined in a given BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a given channel/signal outside the active BWP. Note that "cell", "carrier", and the like in the present disclosure may be replaced with "BWP".

Note that the structures of radio frames, subframes, slots, mini slots, symbols, or the like described above are merely examples. For example, configurations such as the number of subframes included in a radio frame, the number of slots per subframe or radio frame, the number of mini slots included in a slot, the number of symbols and the RBs included in a slot or a mini slot, the number of subcarriers included in the RB, the number of symbols in the TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, an instruction on a radio resource may be given by a given index.

Names used for, for example, parameters in the present disclosure are in no respect limitative. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed in a management table. The information, signals, and the like to be input and output can be overwritten, updated, or appended. The output information, signals, and the like may be deleted. The input information, signals and the like may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and so on. Further, notification of the MAC signaling may be performed using, for example, an MAC control element (CE).

Also, notification of given information (for example, notification of information to the effect that "X holds") does not necessarily have to be sent explicitly, and can be sent implicitly (for example, by not notifying this piece of information, by notifying another piece of information, and the like).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of the transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station and the base station subsystem that performs a communication service in this coverage.

In the present disclosure, terms such as a "mobile station (MS)", a "user terminal", a "user equipment (UE)", and "terminal" can be used interchangeably.

The mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with the base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be reordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and the like as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, the "determining" may be regarded as judging, calculating, computing, processing, deriving, investigating, looking up, search, inquiry (for example, looking up in a table, database, or another data structure), ascertaining, and the like.

Furthermore, the "determining" used herein may be interpreted to mean making "determination" related to receiving (for example, receiving information), transmitting (for example, transmitting information), inputting, outputting, accessing (for example, accessing data in a memory), and the like.

In addition, the "determining" used herein may be interpreted to mean making "determination" related to resolving, selecting, choosing, establishing, comparing, and the like. In other words, the "determining" used herein may be interpreted to mean making "determination" related to some action.

In addition, "determining" used herein may be read as "assuming", "expecting", "considering", or the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a control section that determines spatial relation information for an uplink shared channel (Physical Uplink Shared Channel (PUSCH)) scheduled by downlink control information (DCI) based on a control resource set (COntrol REsource SET (CORESET)) in which the DCI has been detected; and
a transmitting section that transmits the PUSCH using a precoder based on the spatial relation information.

2. The terminal according to claim 1, wherein
the control section determines the spatial relation information based on a CORESET pool index of the CORESET.

3. The terminal according to claim 1 or 2, wherein
the control section determines the transmit power of the PUSCH based on a power control parameter configured for each CORESET pool index.

4. The terminal according to any one of claims 1 to 3, wherein
when a specific higher layer parameter is configured, the control section handles a CORESET for which a CORESET pool index is not configured as a CORESET for a single DCI-based multi-transmission and reception point.

5. A radio communication method in a terminal, comprising:
determining spatial relation information for an uplink shared channel (Physical Uplink Shared Channel (PUSCH)) scheduled by downlink control information (DCI) based on a control resource set (CONtrol REsource SET (CORESET)) in which the DCI has been detected; and
transmitting the PUSCH using a precoder based on the spatial relation information.

6. A base station comprising:
a transmitting section that transmits downlink control information (DCI) used for determining spatial relation information for an uplink shared channel (Physical Uplink Shared Channel (PUSCH)) to a terminal in a given control resource set (CONtrol REsource SET (CORESET)) ;
a receiving section that receives the PUSCH transmitted by the terminal by using a precoder based on the spatial relation information.
